(19) **Europäisches Patentamt**
**European Patent Office**
**Office européen des brevets**

(11) **EP 3 021 540 B1**

(12) **EUROPEAN PATENT SPECIFICATION**

(45) Date of publication and mention
of the grant of the patent:
**02.08.2017 Bulletin 2017/31**

(51) Int Cl.:
***H04L 12/863*** (2013.01)   ***H04L 12/869*** (2013.01)

(21) Application number: **14193148.5**

(22) Date of filing: **14.11.2014**

(54) **Scheduler and method for layer-based scheduling queues of data packets**

Planer und Verfahren zur Planung von Warteschlangen schichtbasierter Datenpaketen

Programmateur et procédé pour files d'attente d'ordonnancement à base de couches de paquets de données

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.05.2016 Bulletin 2016/20**

(73) Proprietor: **Huawei Technologies Co., Ltd.
Longgang District
Shenzhen, Guangdong 518129 (CN)**

(72) Inventor: **Zecharia, Rami
80992 Munich (IL)**

(74) Representative: **Kreuz, Georg Maria
Huawei Technologies Duesseldorf GmbH
Riesstrasse 8
80992 München (DE)**

(56) References cited:
**US-B1- 6 654 374**

• **RAMABHADRAN S ET AL: "STRATIFIED ROUND
ROBIN: A LOW COMPLEXITY PACKET
SCHEDULER WITH BANDWIDTH FAIRNESS AND
BOUNDED DELAY", COMPUTER
COMMUNICATION REVIEW, ACM, NEW YORK,
NY, US, vol. 33, no. 4, 1 October 2003 (2003-10-01),
pages 239-250, XP001224084, ISSN: 0146-4833**
• **GUO C: "SRR: AN O(1) TIME-COMPLEXITY
PACKET SCHEDULER FOR FLOWS IN
MULTISERVICE PACKET NETWORKS", IEEE /
ACM TRANSACTIONS ON NETWORKING, IEEE /
ACM, NEW YORK, NY, US, vol. 12, no. 6, 1
December 2004 (2004-12-01), pages 1144-1155,
XP001220673, ISSN: 1063-6692, DOI:
10.1109/TNET.2004.838601**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>TECHNICAL FIELD</u>

The present invention is directed to a scheduler for queues of data packets and to a method for scheduling such queues of data packets. In particular, the scheduler and the scheduling method relate to the combined usage of a Deficit-Round-Robin (DRR) scheduling method and a Time-Division-Multiplexing (TDM) method, and can be employed in various applications, mainly in the networking area, where scheduling functions are required. The scheduler and the scheduling method provide a single packet delay bound that is independent of the number of flows (queues) to be scheduled.

<u>BACKGROUND</u>

A scheduler implementing a scheduling function typically selects queues to be served. For instance, in networking applications the queues contain received traffic, i.e. received data packets. The data packets need to be de-queued from one or more selected queues, in order to be then sent over a common pipe. Thereby, the scheduling function of the scheduler is particularly required to allow Quality of Service (QoS) and sufficient fairness between the individual queues.

US 6,654,374 B1 relates to a method and apparatus to reduce jitter in packet switched networks providing a guaranteed minimum bandwidth between pairs of packet switches by defining Service Level Agreements.

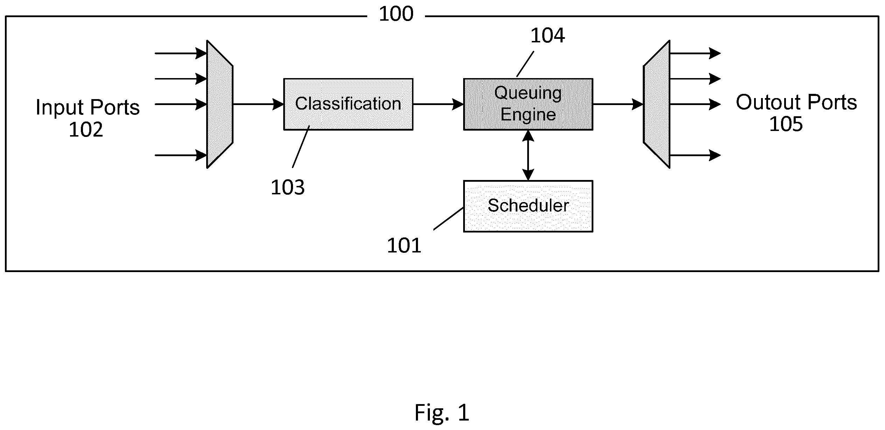

A simplified architectural view of a typical Bridge/Switch/Router 100, which includes a scheduler 101, is shown in Fig. 1. Arriving traffic from different input ports 102 goes through a classification engine 103, which is configured to select the queue to store the received traffic, followed by a queuing engine 104, which is configured to temporarily buffer the received traffic. The queuing can be realized by any methods, such as by input queues, output queues, virtual output queues (VOQ) etc. The scheduler 101 is configured to determine, which of the queues is to be de-queued in a current scheduling window, in order to finally send the traffic to the output ports 105.

Conventional schedulers used in the industry employ conventional scheduling methods (scheduling algorithms), which are, for example, Round-Robin (RR), Deficit-Round-Robin (DRR) or Weighted-Round-Robin (WRR). Conventional schedulers using such scheduling methods are all simplified version of a theoretical absolute scheduler (referred to as GPU). The GPU scheduler is a theoretical scheduler that provides absolute fairness among queues. Fairness means that the output bandwidth of the system is shared fairly among the individual queues with bounded delay per flow, which is not dependent on the number of flows currently being scheduled. However, the theoretical GPU scheduler cannot be implemented practically. Therefore, other simpler schedulers using simplified scheduling algorithms were developed. A drawback of all simplified schedulers is that the jitter and the burst size of the de-queued traffic per queue are higher than the theoretical GPU scheduler.

The simplified schedulers, which intend to approximate the GPU scheduler, may be divided into two classes based on the type of algorithms they use, namely a first class of schedulers using Sorted Priority Algorithms (SPA) and a second class of schedulers using Packet Based Algorithms (PBA).

SPA (or time stamp algorithms) type schedulers are required to maintain a "virtual time", which is used to calculate the order of data packets. In general, these SPA type schedulers provide good fairness and low latency among the individual queues, but are relatively slow. Since they require sorting, their complexity is at best O(log N), wherein N is the number of scheduled elements (e.g. the number of back-logged queues). Accordingly, the usage of such SPA type schedulers in high speed networks is difficult and therefore of limited use.

Examples for algorithms used by SPA type schedulers are Weighted Fair Queuing (WFQ), Virtual Clock, Fair Queuing based on Start-time (FQS), Self-clocked Fair Queuing (SCFQ), Worst-case Fair Weighted Queuing (WF2Q), Start-time Fair Queuing (SFQ), Frame-Based Fair Queuing (FFQ), and Starting Potential-based Fair Queuing (SPFQ).

PBA type schedulers are configured to service data packets in a RR manner with a low complexity. In general, the fairness, latency and burstiness provided by these PBA type schedules is not as good as for SPA type schedulers, but their complexity is only O(1) for any number of queues. Due to this lower complexity, these schedulers became very popular in the industry, in particular PBA type schedulers based on a basic DRR scheduling method.

In the following, a basic DRR scheduling method is explained. There are various approaches of implementing a basic DRR scheduling method. However, all approaches have in common that at least two lists are required, namely an active list and a waiting list, and that the following rules are met:

1. New back-logged queues are placed in the waiting list.

2. When the active list is empty, the waiting list is moved to the active list (i.e. the waiting list is emptied).

3. Queues are selected to be de-queued from the active list only.

    a. The selected queue is always the one at the head of the active list.

4. The selection of a queue from the active list is based on Round-Robin. When using credits (in variations of DRR), Round-Robin rotation depends on the resulting credits.

5. When a queue is selected, its credit is decremented by the size of the de-queued data packets.

6. When a queue is selected, one of the following options can occur:

    a. The queue is emptied - then it is removed from the active list.

    b. The queue is not emptied, but consumed its credits - then it is moved to the waiting list.

    c. The queue is not emptied, and did not yet consume all its credits - then it remains in the active list.

The various approaches for a basic DRR scheduling method differ only on their operation in the above-shown step 6, whereas all other steps remain the same.

A scheduler employing a basic DRR scheduling method can be described by the three phases described below, wherein "*Weighti*" defines the weight of a scheduled Queue i, "*DCi*" defines a deficit counter of the scheduled Queue i, "*Active list*" defines a list of active elements participating in the current scheduling window, and "*Waiting list*" defines a list of active elements waiting to participate in the next scheduling window.

A first phase, i.e. the "En-Queue phase", takes place when a queue becomes not empty, and may be described by:

```
1. Input (QueueID)
2. DCi (of QueueID) = Weighti (of QueueID)
3. If (Active list is empty) Place QueueID in active list
4. Else Place QueueID in waiting list
5. Output ()
```

A second phase, i.e. the "Select phase", is used for the selection of a queue to be de-queued, and may be described by:

```
1. Input ()
2. Take the QueueID from the head of the active list
3. Output (QueueID)
```

A third phase, i.e. the "De-Queue phase", is used for updating the credits and moving the queue accordingly based on the queue state (i.e. whether the queue becomes empty or not) and based on the size of the transmitted data (i.e. the data packet size). The third phase may be described by:

```
1. Input (QueueID, Empty, PacketSize)
2. If (Empty == 1)
3. Remove QueueID from active list
4. Else if (CDi > PacketSize)
5. CDi = CDi - PacketSize
6. Leave QueueID in Head active list
7. Else // CDi ≤ PacketSize
8. CDi = CDi - PacketSize + Weighti
9. Move QueueID to waiting list
10. If (active list is empty) Move waiting list to active list
11. Output ()
```

Some queues may have weights relatively higher than some other queues. For example, there are three queues A, B and C with a weight of 4, and one queue D with a weight of 200. Then, the scheduling result for a fixed packet size of one unit will be AAAA, BBBB, CCCC, DDDD...D (wherein D is selected 200 times in a row). That means, in a basic DRR scheduling method there is for queue D a rather big burst, and accordingly for the queues A, B and C a rather long delay and jitter. Accordingly, a basic DRR scheduling method operates with a complexity of O(1), regardless of the number of queues, but provides unbounded delay with bursty traffic and jitter. When rotating the queues in the active list upon each selection, the scheduling result will look as follows: A, B, C, D, A, B, C, D, A, B, C, D, A, B, C, D, D, D, D...D (wherein D is selected at the last sequence for 197 times in a row), thus providing unbounded delay with bursty traffic and jitter as well.

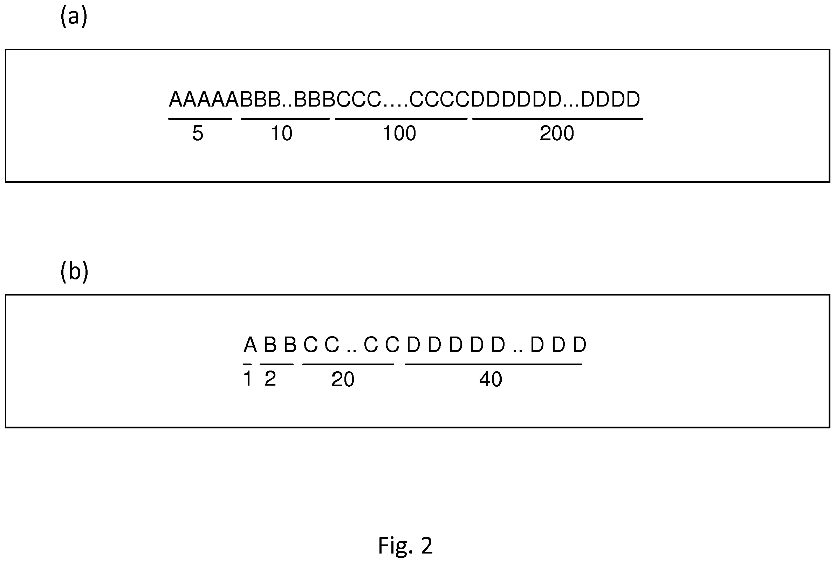

A specific performance example of a basic DRR scheduling method is shown with respect to Fig. 2 in (a), wherein the data packet size is fixed, and wherein a data packet length is equal to one unit of weight. Four queues A, B, C and D are considered with the following weights: WeightA=5, WeightB=10, WeightC=100, and WeightD=200. For this case, a scheduling window (i.e. where all queues are in the active list) is shown in the scheduling sequence example illustrated in Fig 2 in (a). It can be seen that there is a long burst for the queue C and for the queue D, which is not desired by the present invention.

An exemplary desired optimal scheduling sequence example is as shown in Fig. 2 in (b). This optimal scheduling sequence would allow for the better delay, jitter and burstiness of traffic from each queue.

Improvements considered in the prior art to the above-described PBA type schedulers are typically additions of elements from the SPA type schedulers to a RR scheme. Several algorithms have been proposed to improve the performance to the basic DRR scheduling method, such as Active List Queue Method (Aliquem-DRR), Smoothed Round Robin, Pre-order deficit round robin, Nested DRR, Bin Sort Fair Queuing (BSFQ), Elastic Round Robin (ERR), Stratified Round Robin (SRR), and Fair Round Robin (FRR).

Nevertheless, SPA type schedulers remain complex to implement and consume long computation times, particularly when N is large (N is the number of queues supported by the scheduler and potentially the back-logged queues to be scheduled in a specific scheduling window), which may not be practical in high bandwidth switching systems. Further, PBA type schedulers are simpler, but still show increases the latency and burstiness. Since the majority of the industry uses variations of PBA type schedulers, in which specifically the use of DRR scheduling methods is the most popular, the increased latency and burstiness are issues that have to be improved.

Specific approaches exist in the prior art to define PBA, which reduce the burstiness, delay and latency of PBA type schedulers. However, these approaches all operate with complexities of O(log N). Any approach in the prior art that operates with a complexity of O(1) does not significantly reduce the burstiness of the traffic.

For instance, the G-3 algorithm (see e.g. C. Guo, "SRR: an O(1) time complexity packet scheduler for flows in multiservice packet networks" in Proc. ACM SIGCOMM'01. ACM Press, 2001, pp. 211-222) provides an algorithm operating with a complexity of O(1) having bounded end-to-end delay. However, the algorithm does not address the issues of jitter or burstiness.

Further, the Stratified-Round-Robin (SRR) algorithm (see e.g. Sriran Ramabhadran et al., "Stratified Round Robin: A Low Complexity Packet Scheduler with Bandwidth Fairness and Bounded Delay" SIGCOMM, Pages 239-250, 2003) provides less bursty traffic from different back-logged queues with different weights operating with a complexity of O(log n), wherein n is the number of groups of elements within the same range of weights. However, this algorithm is not performed with a complexity of O(1).

In summary, there exists no known prior art approach, which provides a scheduler that operates with a complexity of O(1) with significantly reduced jitter and burstiness.

## SUMMARY

Accordingly, in view of the above-mentioned disadvantages of conventional schedulers, the present invention aims to improve the prior art. Thus, the present invention has the object to provide an improved scheduler, in particular a PBA type scheduler, which provides better performance. Specifically, the present invention aims to provide a scheduler employing an improved scheduling method based on DRR and operation complexity O(1), but which provides less jitter and less bursty traffic, i.e. significantly reduces the burst size of the traffic for the scheduled queues as compared to a conventional DRR schedulers, and bounds the packet delay regardless of the number of active queues currently being scheduled. To this end the present invention desires to propose a better selection of the elements to be de-queued.

The above-mentioned object of the present invention is achieved by the solution provided in the enclosed independent claims. Advantageous implementations of the present invention are further defined in the respective dependent claims. In particular, in the present invention a scheduler is proposed, wherein sub-range scheduling units perform a modified DRR scheduling method, and a master scheduling unit performs a TDM scheduling method of the sub-range scheduling units.

A first aspect of the present invention provides a scheduler for queues of data packets, comprising a plurality of sub-range scheduling units, wherein each sub-range scheduling unit is configured to schedule non-empty queues based on a Deficit-Round-Robin, DRR, scheduling method, wherein each of the sub-range scheduling units is associated with a different sub-range of weight values of queues, and is set to schedule only non-empty queues with weight values within the associated sub-range of weight values, and at least one master scheduling unit, which is configured to schedule the sub-range scheduling units based on a Time-Division-Multiplex, TDM, method, wherein the at least one master scheduling unit is configured to provide each of the sub-range scheduling units a number of time slots according to its associated sub-range of weight values, and wherein the at least one master scheduling unit is configured to control the DRR scheduling of all sub-range scheduling units by sending a message to all sub-range scheduling units to indicate the end of a current scheduling window and the beginning of a next scheduling window.

The scheduler of the first aspect operates with a complexity of $O(1)$, due to its DRR basis implemented by the sub-range scheduling units. However, due to the at least one master scheduling unit, which schedules the sub-range scheduling units with TDM, the burstiness, latency and jitter can be significantly reduced. Thus, the performance of the scheduler is improved in comparison to conventional schedulers keeping the same calculation complexity.

In a first implementation form of the scheduler according to the first aspect as such, the at least one master scheduling unit is configured to select a next sub-range scheduling unit from the plurality of sub-range scheduling units based on the TDM method, and the selected sub-range scheduling unit is configured to select a next non-empty queue based on the DRR scheduling method.

Due to the scheduling of the sub-range scheduling units with TDM, wherein time slots are provided according to the sub-ranges of weight values, sub-range scheduling units having higher weight values are selected more often than sub-range scheduling units having lower weight values. Thus, a sub-range scheduling unit to be selected in a next time slot may already have been selected in a previous time slot, while another sub-range scheduling unit may not yet have been selected in any time slot. Thereby, eventually the queues of all sub-range scheduling units are served, but with less burstiness and latency. The DRR based scheduling method of the sub-range scheduling units is a slightly modified basic DRR scheduling method, and will be explained in detail further below.

In a second implementation form of the scheduler according to the first aspect as such or according to the first implementation form of the first aspect, for a range of weight values of 1 to $(2^{MAX} - 1)$, where MAX is a natural number, the number of sub-range scheduling units is MAX/k, where k is a natural number, and an ith sub-range scheduling unit is associated with queues with weight values from $(2^{[MAX - i * k]} - 1)$ to $2^{[MAX - (i + 1) * k]}$.

Thereby, the optimal scheduling performance of the scheduler, i.e. with smallest latency and burstiness may be realized.

In a third implementation form of the scheduler according to the first aspect as such or according to any of the previous implementation forms of the first aspect, each of the sub-range scheduling units is adapted to perform DRR scheduling by being configured to maintain an active list of non-empty queues participating in the current scheduling window, and a waiting list of non-empty queues waiting to participate in the next scheduling window.

Thus, in contrast to conventional schedulers, multiple pairs of active list and waiting list, i.e. one per sub-range scheduling unit, are employed.

In a fourth implementation form of the scheduler according to the third implementation form of the first aspect, each pair of active list and waiting list contains non-empty queues of a specific sub-range scheduling unit having weight values from the sub-range of weight values associated with the specific sub-range scheduling unit.

Thereby, each sub-range scheduling unit is configured to schedule only queues with weight values in its associated weight value range.

In a fifth implementation form of the scheduler according to the third or fourth implementation form of the first aspect, each of the sub-range scheduling units is configured to switch between an active list and a waiting list only upon receiving an indication from the at least one master scheduling unit.

Thereby, since without such indication from the at least one master scheduling unit a sub-range scheduling unit stays idle, all sub-range scheduling units can be switched at the same time. This is required to reduce the latency and burstiness.

In a sixth implementation form of the scheduler according to one of the third to fifth implementation forms of the first aspect, each of the sub-range scheduling units is configured to schedule non-empty queues by a DRR method, and each of the sub-range scheduling units is configured to switch between active and waiting lists upon a message from the at least one master scheduling unit, and each of the sub-range scheduling units is configured to remove a queue from the active list if the queue becomes empty, and each of the sub-range scheduling units is configured to move a queue from the active list to the waiting list if the queue consumes its weight in the current scheduling window while still remaining non-empty.

Thereby, in a scheduling window a sub-range scheduling unit containing queues with high weight values is dequeued more than other sub-range scheduling units having queues with low weight values, thus allowing more fairly shared bandwidth, whereby burstiness for said queue and latency for the other queues can be reduced.

In a seventh implementation form of the scheduler according to the first aspect as such or according to any of the previous implementation forms of the first aspect, the at least one master scheduling unit is configured to skip a next sub-range scheduling unit when following the configured TDM sequence, if said next sub-range scheduling unit does not contain any non-empty queues in its active list.

Thereby, the number of time slots needed for the total de-queuing can be reduced, i.e. smaller and simpler implementation is possible. Therefore, the performance of the scheduler is further improved.

In an eighth implementation form of the scheduler according to the first aspect as such or according to any of the previous implementation forms of the first aspect, the at least one master scheduling unit is configured to schedule the plurality of sub-range scheduling units in a configured interleaved manner.

The interleaving of the sub-range scheduling units supports the reduction of the burstiness and latency. Further, due to the interleaved manner, each sub-range scheduling unit must be distributed evenly through a scheduling window.

In a ninth implementation form of the scheduler according to the first aspect as such or according to any of the previous implementation forms of the first aspect each sub-range scheduling unit is configured to send a message to the at least one master scheduling unit to indicate that its active list became empty, and the at least one master scheduling unit is configured to send a command to all sub-range scheduling units to switch between their active and waiting lists only when the active lists of all sub-range scheduling units are empty.

In a tenth implementation form of the scheduler according to the first aspect as such or according to any of the previous implementation forms of the first aspect the at least one master scheduling unit is configured to maintain a TDM list of sub-range scheduling units, which are listed according to the TDM method.

In an eleventh implementation form of the scheduler according to the tenth implementation form and the second implementation form of the first aspect, the at least one master scheduling unit is configured to set the number of selections of each sub-range scheduling unit in the TDM list according to the sub-ranges of weight values of queues, and the TDM sequence must contain $\sum 2^{[MAX - (i + 1) * k]}$ scheduling slots, where the sum is from 0 to MAX/k on the index i, and the placement of the sub-range scheduling units in the TDM sequence of scheduling slots is such that they are fully distributed and evenly spaced.

Thereby, the optimum latency and burstiness, and thus the optimum performance of the scheduler can be achieved.

In a twelfth implementation form of the scheduler according to the first aspect as such or according to any of the previous implementation forms of the first aspect, each of the sub-range scheduling units comprises in each of one or more lower hierarchical levels a plurality of sub-sub range scheduling units, wherein each of the sub-sub-range scheduling units is configured to schedule non-empty queues based on a DRR scheduling method, and at least one sub-master scheduling unit, which is configured to schedule the sub-sub-range scheduling units based on a TDM method.

Thereby, nested scheduling can be implemented. In particular, nested scheduling is advantageous in case of big weights, which can cause significant differences in burst and jitter between different sub-range scheduling units.

A second aspect of the invention provides a method for scheduling queues of data packets, comprising steps of scheduling, by a plurality of sub-range scheduling units, non-empty queues based on a Deficit-Round-Robin, DDR, scheduling method, wherein each of the sub-range scheduling units is associated with a different sub-range of weight values of queues, and schedules only queues with weight values within the associated sub-range of weight values, and scheduling, by at least one master scheduling unit, the sub-range scheduling units based on a Time-Division-Multiplex, TDM, method, wherein at least one master scheduling unit provides each of the sub-range scheduling units a number of time slots according to its associated sub-range of weight values, and the at least one master scheduling unit controls the DRR scheduling of all sub-range scheduling units by sending a message to all sub-range scheduling units to indicate the end of a current scheduling window and the beginning of a next scheduling window.

In a first implementation form of the method according to the second aspect as such, the at least one master scheduling unit selects a next sub-range scheduling unit from the plurality of sub-range scheduling units based on the TDM method, and the selected sub-range scheduling unit selects a next non-empty queue based on the DRR scheduling method.

In a second implementation form of the method according to the second aspect as such or according to the first implementation form of the second aspect, for a range of weight values of 1 to ($2^{MAX}$ - 1), where MAX is a natural number, the number of sub-range scheduling units is MAX/k, where k is a natural number, and an ith sub-range scheduling unit is associated with queues with weight values from ($2^{[MAX - i * k]}$ - 1) to $2^{[MAX -(i+1) * k]}$.

Dividing the sub-ranges of the weight values to powers of 2, allows a simple TDM method for the at least one master scheduling unit.

In a third implementation form of the method according to the second aspect as such or according to any of the previous implementation forms of the second aspect, each of the sub-range scheduling units performs DRR scheduling by maintaining an active list of non-empty queues participating in the current scheduling window, and a waiting list of non-empty queues waiting to participate in the next scheduling window.

In a fourth implementation form of the method according to the third implementation form of the second aspect, each pair of active list and waiting list contains non-empty queues of a specific sub range scheduling unit having weight values from the sub-range of weight values associated with the specific sub-range scheduling unit.

In a fifth implementation form of the method according to the third or fourth implementation form of the second aspect, each of the sub-range scheduling units switches between an active list and a waiting list only upon receiving an indication from the at least one master scheduling unit.

In a sixth implementation form of the method according to one of the third to fifth implementation forms of the second aspect, each of the sub-range scheduling units schedules non-empty queues by a DRR method, and each of the sub-range scheduling units switches between active and waiting lists upon a message from the at least one master scheduling unit, and each of the sub-range scheduling units removes a queue from the active list if the queue becomes empty, and each of the sub-range scheduling units moves a queue from the active list to the waiting list if the queue consumes its weight in the current scheduling window while still remaining non-empty.

In a seventh implementation form of the method according to the second aspect as such or according to any of the previous implementation forms of the second aspect, the at least one master scheduling unit skips a next sub-range scheduling unit when following the configured TDM sequence, if said next sub-range scheduling unit does not contain any non-empty queues in its active list.

In an eighth implementation form of the method according to the second aspect as such or according to any of the previous implementation forms of the second aspect, the at least one master scheduling unit schedules the plurality of sub-range scheduling units in a configured interleaved manner.

In a ninth implementation form of the method according to the second aspect as such or according to any of the previous implementation forms of the second aspect each sub-range scheduling unit sends a message to the at least one master scheduling unit to indicate that its active list became empty, and the at least one master scheduling unit sends a command to all sub-range scheduling units to switch between their active and waiting lists only when the active lists of all sub-range scheduling units are empty.

In a tenth implementation form of the method according to the second aspect as such or according to any of the previous implementation forms of the second aspect, the at least one master scheduling unit maintains a TDM list of sub-range scheduling units, which are listed according to the TDM method.

In an eleventh implementation form of the method according to the tenth implementation form and the second implementation form of the second aspect, the at least one master scheduling unit sets the number of selections of each sub-range scheduling unit in the TDM list according to the sub-ranges of weight values of queues, and the TDM sequence must contain $\sum 2^{[MAX - (1 + 1) * k]}$ scheduling slots, where the sum is from 0 to MAX/k on the index i, and the placement of the sub-range scheduling units in the TDM sequence of scheduling slots is such that they are fully distributed and evenly spaced.

In a twelfth implementation form of the method according to the second aspect as such or according to any of the previous implementation forms of the second aspect, each of the sub-range scheduling unit comprises in each of one or more lower hierarchical levels a plurality of sub-sub range scheduling units, wherein each of the sub-sub-range scheduling units schedules non-empty queues based on a DRR scheduling method, and at least one sub-master scheduling unit, which schedules the sub-sub-range scheduling units based on a TDM method.

With the method of the second aspect, all advantages of the scheduler of the first aspect can be achieved as well.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF DRAWINGS

The above-described aspects and implementation forms of the present invention will be explained in the following description of specific embodiments in relation to the enclosed drawings, in which

Fig. 1  shows a simplified architecture of a Bridge/Switch/Router including a conventional scheduler or a scheduler according to any embodiment of the present invention.

Fig. 2  shows a scheduling sequence example of a basic DRR scheduling method in (a), and shows an optimal scheduling sequence example in (b).

Fig. 3  shows a scheduler according to an embodiment of the present invention.

Fig. 4  shows a scheduler according to an embodiment of the present invention.

Fig. 5  shows a scheduling method for queues according to an embodiment of the present invention.

DETAILED DESCRIPION OF EMBODIMENTS

The present invention presents a scheduler for queues of data packets, which employs a scheduling method based on a basic DRR scheduling method, and thus has an operation complexity of O(1), but which also employs at least a two-level scheduling approach based on TDM, so that the latency, burstiness and jitter are reduced.

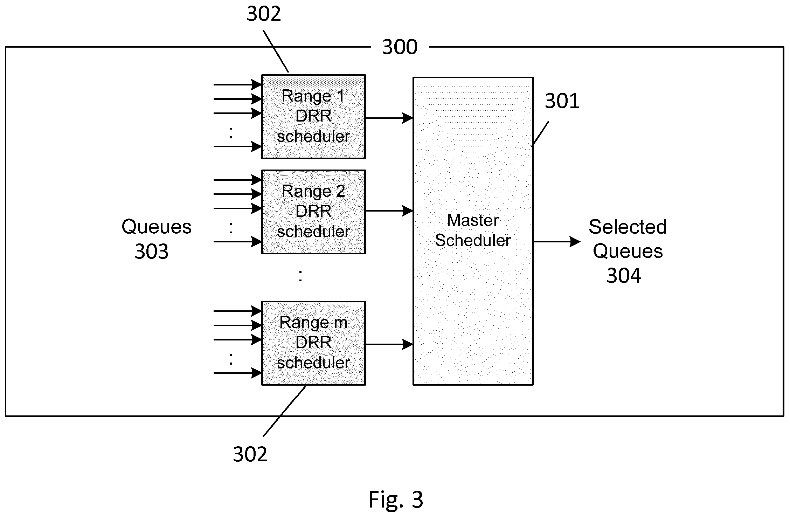

In particular, Fig. 3 shows a high level view of a scheduler 300 according to an embodiment of the present invention. The scheduler 300 comprises at least one master scheduling unit 301 (labelled as "Master Scheduler" in Fig. 3), and a plurality of sub-range scheduling units 302 (labelled as "Range 1 DRR scheduler" ... "Range m DRR scheduler" in Fig. 3). The at least one master scheduling unit 301 on the one hand side, and the sub-range scheduling units 302 on the other hand side, implement a two-level scheduling approach.

Each of the sub-range scheduling units 302 is configured to schedule non-empty queues 303 based on a DRR scheduling method. The DRR scheduling method of the sub-range scheduling units 302 bases particularly on an above-described basic DRR scheduling scheme with some modifications. The specific modified DRR scheduling method is explained in detail further below.

As indicated by the labelling in Fig. 3, each sub-range scheduling unit 302 is associated with a different sub-range (i.e. Range 1 ... Range m in Fig. 3) of weight values of the queues 303. Assuming a fixed data packet size, one unit of weight of a queue may, for instance, be equal to a data packet length. That means, the weight of a queue may be equal to the total length of its data packets. Each sub-range scheduling unit 302 is further configured to schedule only queues 303, which have weight values that are within its associated sub-range of weight values.

The at least one master scheduling unit 301 is configured to schedule the sub-range scheduling units 302 based on a TDM method, and to output accordingly selected queues 304. That is, the at least one master scheduling unit is configured to select the sub-range scheduling units 302 one after the other in the TDM method. When a sub-range scheduling unit 302 is selected, it selects a queue 303 based on the DRR scheduling method and outputs it to the master scheduling unit 301, which outputs it as selected queue 304. To this end, the scheduler 301 has multiple pairs of active/waiting lists, namely one per sub-range scheduling unit 302. Each pair of lists contains active queues 303 (i.e. back-logged queues) within the same range of weight values.

In particular, the at least one master scheduling unit 301 is configured to provide each of the sub-range scheduling units 302 with a number of time slots according to its associated sub-range of weight values, and is configured to control simultaneously the DRR based scheduling method of all sub-range scheduling units 302 by sending a message to all sub-range scheduling units 302, in order to indicate the end of a current scheduling window and the beginning of a next scheduling window. More specifics of the TDM method carried out by the at least one master scheduling unit 301 are explained in detail further below.

The scheduler 300 of Fig. 3 is also referred to as a Slot-Stratified-Round-Robin (SSRR), and is configured to use two levels of scheduling, as described above. It is noted that the scheduler 300 may be used in a Bridge/Switch/Router 100 as shown in Fig. 1, i.e. as a replacement for the conventional scheduler 101. The present invention also includes as an embodiment a Bridge/Switch/Router 100 as shown in Fig. 1, which includes a scheduler 301 as described with respect to Fig. 3, which is positioned and configured in the Bridge/Switch/Router like the scheduler 101.

In the scheduler 300, the number of sub-range scheduling units 302 is determined as follows. The entire range of weight values (or short "weights") is defined by a parameter *MAX* (as a natural number) as:

$$1 \text{ to } (2^{MAX} - 1)$$

The number of sub-ranges of weights within the range of weight values is defined by a parameter *k*, wherein its value must be a divider of *MAX* (e.g. if *MAX* is set to 8, then *k* can only be 1, 2 or 4), namely as:

$$MAX/k$$

The sub-ranges of weight values are defined as:

$$2^{(MAX - i * k)} - 1 \text{ to } 2^{[MAX - (i + 1) * k]}$$

Therein, i is a free running index starting at *0* up to *MAX/k - 1*.

For example, if *MAX*=8 (i.e. if the maximum weight is $2^8$-1=255) and *k*=2, the result are the following 4 (*MAX*/*k*= 8/2=4) sub-ranges:

- i=0, Range 0: weights from $2^{(8 - 0 * 2)}$ - 1 to $2^{[8 - (0 + 1) * 2]}$ that is: 255-64

- i=1, Range 1: weights from $2^{(8 - 1 * 2)}$ - 1 to $2^{[8 - (1 + 1) * 2]}$ that is: 63-16

- i=2, Range 2: weights from $2^{(8 - 2 * 2)}$ - 1 to $2^{[8 - (2 + 1) + 2]}$ that is: 15-4

- i=3, Range 3: weights from $2^{(8 - 3 * 2)}$ - 1 to $2^{[8 - (3 + 1) * 2]}$ that is: 3-0

In the above example, a queue with a weight=60 is, for instance, associated with a sub-range scheduling unit 302 having index i=1.

When *k*=1, the last few sub-ranges are preferably combined to give one sub-range, in order to relax the total number of sub-range scheduling units 302, while still achieving almost the same desired behaviour of the scheduler 300. For example, if *MAX*=8 (i.e. if the maximum weight is $2^8$-1=255) and *k*=1, there are 8 sub-ranges as follows:

1. 255-128

2. 127-64

3. 63-32

4. 31-16

5. 15-8

6. 7-4

7. 3-2

8. 1-0

Now, for instance, the last four sub-ranges (i.e. the sub-ranges 5.-8.) are preferably combined to a single sub-range, i.e. sub-range including weights 15-0. Thereby, while almost the desired behavior is achieved, a smaller implementation of the scheduler 300 is possible.

The scheduling method employed by the master scheduling unit 301 in the scheduler 300 of the embodiment shown in Fig. 3 is now specifically explained. The master scheduling unit 301 selects non-empty sub-range scheduling units 302. A sub-range scheduling unit 302 is considered to be non-empty, if at least one non-empty queue 303 is in its active list.

In particular, the master scheduling unit 301 is configured to select the non-empty sub-range scheduling units 302 using the TDM scheme, which is tuned to consider the weight ranges of the sub-range scheduling units. The ranges of the weights are preferably divided to powers of 2 as explained above, in order to allow a simple TDM scheme.

Preferably, the master scheduling unit 301 does not select a sub-range scheduling unit 302, if the sub-range scheduling unit 302 is empty. In this case, instead the time slot is used to select the next non-empty sub-range scheduling unit 302. This preferred scheduling scheme is called time-conserving TDM.

The size of the scheduling window for the master scheduling unit 301 is:

$$\sum 2^{[MAX - (i + 1) * k]}$$

Therein, the sum is from 0 to MAX/k-1 (i.e. the number of the sub-range scheduling units 302, which are also abbreviated in the following as "SRS"). This is actually the sum of the lowest weights respectively associated with each of sub-range scheduling units 302.

For example, the weight range is 0 to 255, and k=2. Thus, there are four sub-range scheduling units (as shown above), i.e.:

- A 1st SRS (255-64) appears in the TDM scheme 64 times

- A 2nd SRS (63-16) appears in the TDM scheme 16 times

- A 3rd SRS (15-4) appears in the TDM scheme 4 times

- A 4th SRS (3-1) appears in the TDM scheme 1 times

The scheduling window size is 1+4+16+64 = 85. The scheduling window can also be smaller, if one of the sub-range scheduling units 302 is empty, and if the slot of the empty sub-range scheduling unit 302 is used for the next non-empty sub-range scheduling unit 302 in the TDM sequence.

The selection window is repeated over and over, until the active lists of all sub-range scheduling units 302 are empty. Only when the active lists of all sub-range scheduling units 302 are empty, the master scheduling unit 301 sends a message to all the sub-range scheduling units 302, in order to switch between their active and waiting lists.

A sub-range scheduling unit 302 that has an empty active list is configured to wait idle, until the message of the master scheduling unit 301 arrives to switch between its active and waiting lists. Until then it is considered as empty at the master scheduling unit 301, and will not be selected in the TDM of the master scheduling unit 301.

The maximum number of selections that a sub-range scheduling unit 302 can be selected by the master scheduling unit 301 within a scheduling window is:

$$\sum 2^{[\text{MAX} - (i + 1) * k]}$$

Therein, i is the index of the sub-range scheduling unit 302. A sub-range scheduling unit 302 can be selected less number of times, if it becomes empty during the scheduling window. When it becomes empty, it is idle until a switch message is delivered form the master scheduling unit 301.

The selection of each sub-range scheduling unit 302 is interleaved among the selections of the other sub-range scheduling units 302. The interleaving of the sub-range scheduling unit 302 within the TDM sequence has to be such that each sub-range scheduling unit 302 is distributed evenly through the TDM scheduling window.

When $k$=1, the weights of each sub-range scheduling unit 302 are 1, 2, 4, 8, 16,..., which means $2^i$ when i is 0, 1, 2, 3, 4,... . In this case the following distribution of sub-range scheduling unit 302 in the sequence of the TDM scheduling method is preferably set:

1. A first sub-range scheduling unit 302 (i.e. the highest weight sub-range scheduling unit 302) is placed from time slot 1 with equal spacing of two time slots in between the selections, i.e. for instance the time slots 1, 3, 5, 7, ...

2. A second sub-range scheduling unit 302 (i.e. the next highest weight sub-range scheduling unit 302) is placed from the next free time slot (time slot 2) with equal spacing of four slots in between the selections, i.e. for instance 2, 6, 10, 14, 18, ...

3. A third sub-range scheduling unit 302 (i.e. the next highest weight sub-range scheduling unit 302) is placed from the next free time slot (time slot 4) with equal spacing of eight time slots in between the selections, i.e. for instance 4, 12, 20, 28,

4. And so on.

In general, for $k$=1, an ith sub-range scheduling unit 302 is placed starting at time slot $2^i$ and is spaced with $2^{i+1}$ time slots. For example, if the weight range is 0 to 15 and $k$=1, the scheduling window size is 15 = 1+2+4+8, and the entire range of weights is divided to four sub-ranges, namely 15-8, 7-4, 3-2, 1-0.

Thus, the TDM distribution is as follows:

| #Slot | #SRS |
|-------|------|
| 1 | 1 |
| 2 | 2 |
| 3 | 1 |
| 4 | 3 |

(continued)

| #Slot | #SRS |
|-------|------|
| 5 | 1 |
| 6 | 2 |
| 7 | 1 |
| 8 | 4 |
| 9 | 1 |
| 10 | 2 |
| 11 | 1 |
| 12 | 3 |
| 13 | 1 |
| 14 | 2 |
| 15 | 1 |

Note that this preferable algorithm indicates that if a sub-range scheduling unit 302 is empty, then its time slot is taken by the next non empty sub-range scheduling unit 302 in the TDM sequence.

Using the above example, if for instance the third sub-range scheduling unit 302 (SRS #3) is empty after its selection in the fourth time (Slot #4), the selection during the twelfth time slot (Slot #12) will be a different non-empty sub-range scheduling unit 302. As can be seen with this example, the sub-range scheduling unit 302 are distributed as evenly as possible.

The same distribution scheme can also be applied for k>1, such that the placement of a specific sub-range scheduling unit 302 in the TDM sequence is fully distributed and evenly spaced.

The DRR scheduling method employed by each sub-range scheduling unit 302 in the scheduler 300 of the embodiment shown in Fig. 3 is now specifically explained. The scheduling of the sub-range scheduling units 302 is the same as the basic DRR scheduling method described above in the background section, but with modifications in the third phase, i.e. in the "De-queue phase", as follows:

In the De-Queue phase, the credits are updated, and the queue is moved accordingly based on the queue state (i.e. if the queue becomes empty or not) and the size of the transmitted data (i.e. the packet size) according to:

```
1. Input (QueueID, Empty, PacketSize)
2. If (Empty == 1)
3. Remove QueueID from active list
4. Else if (CDi > PacketSize)
5. CDi = CDi - PacketSize
6. Place QueueID in the end of the active list
7. Else // CDi ≤ PacketSize
8. CDi = CDi - PacketSize + Weighti
9. Move QueueID to waiting list
10. If (active list is empty) Wait
11. Output ()
```

The above steps 6 and 10 are different from the basic DRR scheduling method described in the background section.

In particular, in step 6 of DRR based scheduling method of the sub-range scheduling units 302, a selected queue (QueueID) is placed at the end of the active list in case it has more credits, rather than to remain at the head of the list for more selections as in the basic DRR. This means, a rotation of the queues in the active list occurs upon each single selection.

Further, in step 10 of the DRR based scheduling method of the sub-range scheduling units 302, when an active list is empty, the sub-range scheduling unit 302 needs to wait for an indication from the at least one master scheduling unit 301 to switch between the active and the waiting list, because the switch must occur for all sub-range scheduling units at the same time.

The complete DRR scheduling method of the sub-range scheduling units 302 in Fig. 3 is described below and can again (as for the basic DRR scheduling method) be broken into three phases, wherein the following notions are adopted.

"Weighti" defines the weight of a scheduled Queue i, "DCi" defines a deficit counter of the scheduled Queue i, "Active list[m]" defines lists of active elements participating in the current scheduling window, "Waiting list[m]" defines lists of active elements waiting to participate in the next scheduling window, "TDM list" defines a list of sub-range scheduling units 302 in a TDM manner for the master scheduling unit 301, "TDM Pointer defines a pointer to the TDM list, and "m" defines an index of a specific sub-range scheduling unit 302.

The first phase, i.e. the "En-Queue phase", may be described by:

```
1. Input (QueueID)
2. DCi (of QueueID) = Weighti (of QueueID)
3. m ← index of Waiting list based on Weighti
4. Place QueueID in active list of SRS m
5. If (Active list of SRS m is empty)
6. Move waiting list of SRS m to active list of SRS m
7. Output ()
```

The second phase, i.e. the "Select phase", may be described by:

```
1. Input ()
2. // Select SRS
3. m ← TDM Pointer // get the current SRS to select
4. If (not active lists of all SRSs are empty)
    a. While (active list [m] is empty) {
    b. TDM Pointer ++
    c. m ← TDM Pointer
    d. }
    e. QueueID ← head of active list [m] // take QID from selected SRSm
5. Else QueueID ← Null
6. Output (QueueID)
```

The third phase, i.e. the "De-Queue phase", may be described by:

```
1. Input (QueueID, Empty, Packet Size, m)
2. If (Empty == 1)
3. Remove QueueID from active list[m]
4. Else if (CDi > PacketSize)
5. CDi = CDi - PacketSize
6. Place QueueID in the end of the active list
7. Else // CDi ≤ PacketSize
8. CDi = CDi - PacketSize + Weighti
9. Move QueueID to waiting list[m]
10. If (all active lists are empty)
11. For (k=0 to Max SRS lists) Move waiting list[k] to active list[k]
12. Output ()
```

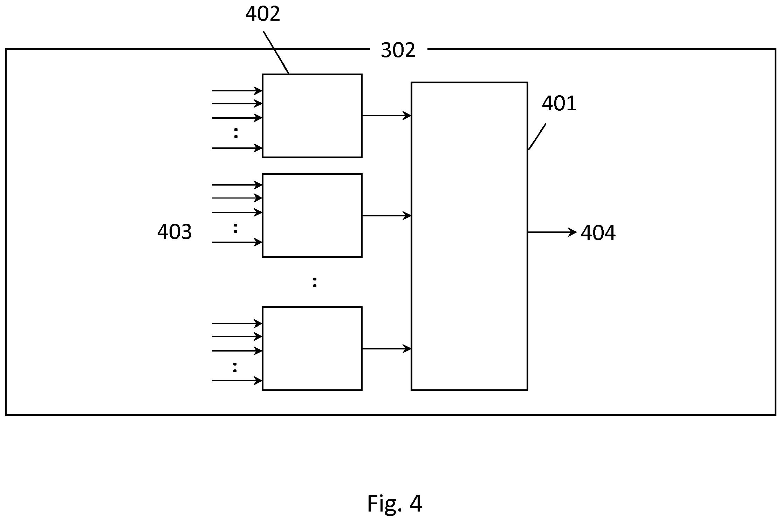

A further embodiment of a scheduler 300 of the present invention is shown in Fig. 4. The further embodiment is an extension of the embodiment of the present invention shown in Fig. 3.

In the embodiment shown in Fig. 4, each sub-range scheduling unit 302 of the scheduler 300 (only one sub-range scheduling unit 302 is exemplarily shown in Fig. 4) may be further divided in the same manner as the scheduler 300 itself, i.e. into a plurality of lower hierarchy level sub-range scheduling units 402 (also referred to as sub-sub-range scheduling units 402) and at least one lower level master scheduling unit 401 (also referred to as sub-master scheduling unit 401). Such an implementation is called nested scheduling, i.e. each of the sub-range scheduling units 302 shown in Fig. 3 is a nested scheduler 302 (as the one shown in Fig. 4). The sub-master scheduling unit 401 in each nested scheduler 302 operates in the same manner as the above-described high level master scheduling unit 301, i.e. employs a TDM scheme to schedule the sub-sub-range scheduling units 402, wherein the sub-range scheduling units 402 implement DRR based scheduling, and outputs selected queues 404. The nested scheduling scheme is, for instance, advantageous in case of big weights, where the range between $2^n$ and $2^{n+1}$ is large enough to create significant differences in burst and jitter. The nested scheduling scheme is not limited to one lower hierarchy level, but can include further hierarchy levels in a similar manner. That means the sub-range scheduling units of the lowest hierarchy level nested scheduler implement DRR, while for higher hierarchy levels the sub-range scheduling units carry out TDM scheduling of lower hierarchy level sub-range scheduling units.

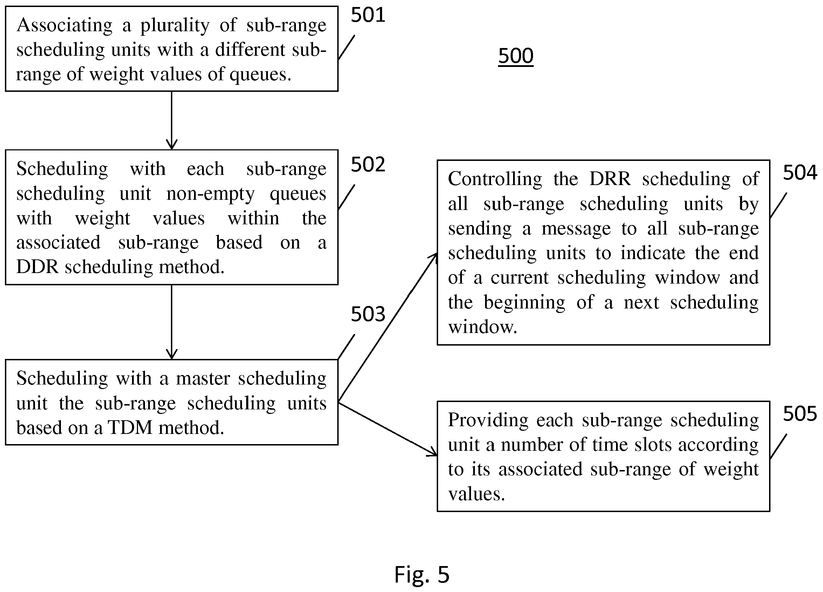

Figure 5 shows a scheduling method 500 for queues according to an embodiment of the present invention. In step 501 a plurality of sub-range scheduling units 302 is associated with a different sub-range of weight values of queues. In step 502 with each sub-range scheduling unit 302 non-empty queues with weight values within the associated sub-range of weight values are scheduled based on a DDR scheduling method. In step 503 the sub-range scheduling units 302 are scheduled with a master scheduling unit 301 based on a TDM method. Step 503 comprises a step 504, in which the master scheduling unit 301 controls the DRR scheduling of all sub-range scheduling units 302 by sending a message to all sub-range scheduling units 302 to indicate the end of a current scheduling window and the beginning of a next scheduling window. Step 503 also comprises a step 505, in which the master scheduling unit 301 provides each sub-range scheduling unit 302 with a number of time slots according to its associated sub-range of weight values.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. Scheduler (300) for queues of data packets, comprising
a plurality of sub-range scheduling units (302), wherein each sub-range scheduling unit (302) is configured to schedule non-empty queues (303) based on a Deficit-Round-Robin, DRR, scheduling method,
wherein each of the sub-range scheduling units (302) is associated with a different sub-range of weight values of queues, and is set to schedule only non-empty queues (303) with weight values within the associated sub-range of weight values, and
at least one master scheduling unit (301), which is configured to schedule the sub-range scheduling units (302) based on a Time-Division-Multiplex, TDM, method,
wherein the at least one master scheduling unit (301) is configured to provide each of the sub-range scheduling units (302) a number of time slots according to its associated sub-range of weight values, and
wherein the at least one master scheduling unit (301) is configured to control the DRR scheduling of all sub-range scheduling units (302) by sending a message to all sub-range scheduling units (302) to indicate the end of a current scheduling window and the beginning of a next scheduling window.

2. Scheduler (300) according to claim 1, wherein
the at least one master scheduling unit (301) is configured to select a next sub-range scheduling unit (302) from the plurality of sub-range scheduling units (302) based on the TDM method, and
the selected sub-range scheduling unit (302) is configured to select a next non-empty queue (303) based on the DRR scheduling method.

3. Scheduler (300) according to claim 1 or 2, wherein
for a range of weight values of 1 to ($2^{MAX}$ - 1), where MAX is a natural number, the number of sub-range scheduling units (302) is MAX/k, where k is a natural number, and an $i^{th}$ sub-range scheduling unit is associated with queues (303) with weight values from ($2^{[MAX - i * k]}$ - 1) to $2^{[MAX - (i + 1) * k]}$.

4. Scheduler (300) according to one of the claims 1 to 3, wherein
each of the sub-range scheduling units (302) is adapted to perform DRR scheduling by being configured to maintain an active list of non-empty queues participating in the current scheduling window, and a waiting list of non-empty queues waiting to participate in the next scheduling window.

5. Scheduler (300) according to claim 4, wherein
each pair of active list and waiting list contains non-empty queues (303) of a specific sub-range scheduling unit (302) having weight values from the sub-range of weight values associated with the specific sub-range scheduling unit (302).

6. Scheduler (300) according to one of the claim 4 or 5, wherein
each of the sub-range scheduling units (302) is configured to switch between an active list and a waiting list only upon receiving an indication from the at least one master scheduling unit (301).

**7.** Scheduler (300) according to one of the claims 4 to 6, wherein
each of the sub-range scheduling units (302) is configured to schedule non-empty queues (303) by a DRR method, and
each of the sub-range scheduling units (302) is configured to switch between active and waiting lists upon a message from the at least one master scheduling unit (301), and
each of the sub-range scheduling units (302) is configured to remove a queue (303) from the active list if the queue (303) becomes empty, and
each of the sub-range scheduling units (302) is configured to move a queue (303) from the active list to the waiting list if the queue (303) consumes its weight in the current scheduling window while still remaining non-empty.

**8.** Scheduler (300) according to one of the claims 1 to 7, wherein
the at least one master scheduling unit (301) is configured to skip a next sub-range scheduling unit (302) when following the configured TDM sequence, if said next sub-range scheduling unit (302) does not contain any non-empty queues (303) in its active list.

**9.** Scheduler (300) according to one of the claims 1 to 8, wherein
the at least one master scheduling unit (301) is configured to schedule the plurality of sub-range scheduling units (302) in a configured interleaved manner.

**10.** Scheduler (300) according to one of the claims 1 to 9, wherein
each sub-range scheduling unit (302) is configured to send a message to the at least one master scheduling unit (301) to indicate that its active list became empty, and
the at least one master scheduling unit (301) is configured to send a command to all sub-range scheduling units (302) to switch between their active and waiting lists only when the active lists of all sub-range scheduling units (302) are empty.

**11.** Scheduler (300) according to one of the claims 1 to 10, wherein
the at least one master scheduling unit (301) is configured to maintain a TDM list of sub-range scheduling units (302), which are listed according to the TDM method.

**12.** Scheduler (300) according to claim 11 and claim 3, wherein
the at least one master scheduling unit (301) is configured to set the number of selections of each sub-range scheduling unit (302) in the TDM list according to the sub-ranges of weight values of queues (303), and
the TDM sequence must contain $\sum 2^{[MAX - (i + 1) * k]}$ scheduling slots, where the sum is from 0 to MAX/k, and
the placement of the sub-range scheduling units (302) in the TDM sequence of scheduling slots is such that they are fully distributed and evenly spaced.

**13.** Scheduler (300) according to one of the claims 1 to 12, wherein each of the sub-range scheduling units (302) comprises in each of one or more lower hierarchical levels
a plurality of sub-sub range scheduling units (402), wherein each of the sub-sub-range scheduling units (402) is configured to schedule non-empty queues (403) based on a DRR scheduling method, and
at least one sub-master scheduling unit (401), which is configured to schedule the sub-sub-range scheduling units (402) based on a TDM method.

**14.** Method (500) for scheduling queues of data packets, comprising steps of
scheduling (502), by a plurality of sub-range scheduling units (302), non-empty queues (303) based on a Deficit-Round-Robin, DDR, scheduling method,
wherein each of the sub-range scheduling units (302) is associated (501) with a different sub-range of weight values of queues, and schedules (502) only queues (303) with weight values within the associated sub-range of weight values, and
scheduling (503), by at least one master scheduling unit (301), the sub-range scheduling units (302) based on a Time-Division-Multiplex, TDM, method,
wherein the at least one master scheduling unit (301) provides (504) each of the sub-range scheduling units (302) a number of time slots according to its associated sub-range of weight values, and
the at least one master scheduling unit (301) controls (505) the DRR scheduling of all sub-range scheduling units (302) by sending a message to all sub-range scheduling units (302) to indicate the end of a current scheduling window and the beginning of a next scheduling window.

**Patentansprüche**

1. Planer (300) für Warteschlangen von Datenpaketen, umfassend:

mehrere Teilbereich-Planungseinheiten (302), wobei jede Teilbereich-Planungseinheit (302) dazu konfiguriert ist, nicht leere Warteschlangen (303) basierend auf einem "Deficit-Round-Robin"-Planungsverfahren bzw. DRR-Planungsverfahren zu planen,
wobei jede der Teilbereich-Planungseinheiten (302) mit einem unterschiedlichen Teilbereich von Gewichtswerten von Warteschlangen assoziiert ist und eingestellt ist, nur nicht leere Warteschlangen (303) mit Gewichtswerten im assoziierten Teilbereich von Gewichtswerten zu planen, und
mindestens eine Master-Planungseinheit (301), die dazu konfiguriert ist, die Teilbereich-Planungseinheiten (302) basierend auf einem Zeitmultiplex-Verfahren bzw. TDM-Verfahren zu planen,
wobei die mindestens eine Master-Planungseinheit (301) dazu konfiguriert ist, jeder der Teilbereich-Planungseinheiten (302) eine Anzahl von Zeitfenstern gemäß ihrem assoziierten Teilbereich von Gewichtswerten bereitzustellen, und
wobei die mindestens eine Master-Planungseinheit (301) dazu konfiguriert ist, die DRR-Planung aller Teilbereich-Planungseinheiten (302) durch Senden einer Nachricht zu allen Teilbereich-Planungseinheiten (302), um das Ende eines gegenwärtigen Planungsfensters und den Anfang eines nächsten Planungsfensters anzugeben, zu steuern.

2. Planer (300) nach Anspruch 1, wobei
die mindestens eine Master-Planungseinheit (301) dazu konfiguriert ist, eine nächste Teilbereich-Planungseinheit (302) aus den mehreren Teilbereich-Planungseinheiten (302) basierend auf dem TDM-Verfahren auszuwählen, und
die ausgewählte Teilbereich-Planungseinheit (302) dazu konfiguriert ist, eine nächste nicht leere Warteschlange (303) basierend auf dem DRR-Planungsverfahren auszuwählen.

3. Planer (300) nach Anspruch 1 oder 2, wobei,
für einen Bereich von Gewichtswerten von 1 bis ($2^{MAX}$-1), wobei MAX eine natürliche Zahl ist, die Anzahl von Teilbereich-Planungseinheiten (302) MAX/k ist, wobei k eine natürliche Zahl ist, und eine i-te Teilbereich-Planungseinheit mit Warteschlangen (303) mit Gewichtswerten von ($2^{[MAX - i * k]}$ 1) bis $2^{[MAX - (i + 1) * k]}$ assoziiert ist.

4. Planer (300) nach einem der Ansprüche 1 bis 3, wobei
jede der Teilbereich-Planungseinheiten (302) dazu ausgelegt ist, eine DRR-Planung durchzuführen, indem sie dazu konfiguriert ist, eine Aktivliste von nicht leeren Warteschlangen, die am gegenwärtigen Planungsfenster teilnehmen, und eine Warteliste von nicht leeren Warteschlangen, die darauf warten, am nächsten Planungsfenster teilzunehmen, zu verwalten.

5. Planer (300) nach Anspruch 4, wobei
jedes Paar von Aktivliste und Warteliste nicht leere Warteschlangen (303) einer spezifischen Teilbereich-Planungseinheit (302) mit Gewichtswerten vom Teilbereich von Gewichtswerten, die mit der spezifischen Teilbereich-Planungseinheit (302) assoziiert sind, enthält.

6. Planer (300) nach einem der Ansprüche 4 oder 5, wobei
jede der Teilbereich-Planungseinheiten (302) dazu konfiguriert ist, nur beim Empfangen einer Angabe von der mindestens einen Master-Planungseinheit (301) zwischen einer Aktivliste und einer Warteliste umzuschalten.

7. Planer (300) nach einem der Ansprüche 4 bis 6, wobei
jede der Teilbereich-Planungseinheiten (302) dazu konfiguriert ist, nicht leere Warteschlangen (303) durch ein DRR-Verfahren zu planen, und
jede der Teilbereich-Planungseinheiten (302) dazu konfiguriert ist, bei einer Nachricht von der mindestens einen Master-Planungseinheit (301) zwischen Aktiv- und Wartelisten umzuschalten, und
jede der Teilbereich-Planungseinheiten (302) dazu konfiguriert ist, eine Warteschlange (303) aus der Aktivliste zu entfernen, falls die Warteschlange (303) leer wird, und
jede der Teilbereich-Planungseinheiten (302) dazu konfiguriert ist, eine Warteschlange (303) von der Aktivliste zur Warteliste zu verschieben, falls die Warteschlange (303) ihr Gewicht im gegenwärtigen Planungsfenster verbraucht, während sie weiterhin nicht leer bleibt.

8. Planer (300) nach einem der Ansprüche 1 bis 7, wobei

die mindestens eine Master-Planungseinheit (301) dazu konfiguriert ist, eine nächste Teilbereich-Planungseinheit (302) beim Folgen der konfigurierten TDM-Sequenz zu überspringen, falls die nächste Teilbereich-Planungseinheit (302) keine nicht leeren Warteschlangen (303) in ihrer Aktivliste enthält.

9. Planer (300) nach einem der Ansprüche 1 bis 8, wobei
die mindestens eine Master-Planungseinheit (301) dazu konfiguriert ist, die mehreren Teilbereich-Planungseinheiten (302) auf eine konfigurierte verschachtelte Weise zu planen.

10. Planer (300) nach einem der Ansprüche 1 bis 9, wobei
jede Teilbereich-Planungseinheit (302) dazu konfiguriert ist, eine Nachricht zu der mindestens einen Master-Planungseinheit (301) zu senden, um anzugeben, dass ihre Aktivliste leer wurde, und
die mindestens eine Master-Planungseinheit (301) dazu konfiguriert ist, einen Befehl zu allen Teilbereich-Planungseinheiten (302) zu senden, zwischen ihren Aktiv- und Wartelisten nur umzuschalten, wenn die Aktivlisten aller Teilbereich-Planungseinheiten (302) leer sind.

11. Planer (300) nach einem der Ansprüche 1 bis 10, wobei
die mindestens eine Master-Planungseinheit (301) dazu konfiguriert ist, eine TDM-Liste von Teilbereich-Planungseinheiten (302) zu verwalten, die gemäß dem TDM-Verfahren aufgelistet sind.

12. Planer (300) nach Anspruch 11 und Anspruch 3, wobei
die mindestens eine Master-Planungseinheit (301) dazu konfiguriert ist, die Anzahl von Auswahlen jeder Teilbereich-Planungseinheit (302) in der TDM-Liste gemäß den Teilbereichen von Gewichtswerten von Warteschlangen (303) einzustellen, und die TDM-Sequenz $\sum 2^{[MAX - (i + 1) * k]}$ Planungsfenster enthalten muss, wobei die Summe von 0 bis MAX/k ist, und
die Platzierung der Teilbereich-Planungseinheiten (302) in der TDM-Sequenz von Planungsfenstern derart ist, dass sie vollständig verteilt und gleichmäßig aufgeteilt sind.

13. Planer (300) nach einem der Ansprüche 1 bis 12, wobei jede der Teilbereich-Planungseinheiten (302) in jeder von einer oder mehreren niedrigeren hierarchischen Ebenen Folgendes umfasst:

mehrere Teil-Teilbereich-Planungseinheiten (402), wobei jede der Teil-Teilbereich-Planungseinheiten (402) dazu konfiguriert ist, nicht leere Warteschlangen (403) basierend auf einem DRR-Planungsverfahren zu planen, und
mindestens eine Teil-Master-Planungseinheit (401), die dazu konfiguriert ist, die Teil-Teilbereich-Planungseinheiten (402) basierend auf einem TDM-Verfahren zu planen.

14. Verfahren (500) zum Planen von Warteschlangen von Datenpaketen, das die folgenden Schritte umfasst:

Planen (502), durch mehrere Teilbereich-Planungseinheiten (302), von nicht leeren Warteschlangen (303) basierend auf einem "Deficit-Round-Robin"-Planungsverfahren bzw. DRR-Planungsverfahren,
wobei jede der Teilbereich-Planungseinheiten (302) mit einem unterschiedlichen Teilbereich von Gewichtswerten von Warteschlangen assoziiert ist (501) und nur Warteschlangen (303) mit Gewichtswerten im assoziierten Teilbereich von Gewichtswerten plant (502), und
Planen (503), durch mindestens eine Master-Planungseinheit (301), der Teilbereich-Planungseinheiten (302) basierend auf einem Zeitmultiplex-Verfahren bzw. TDM-Verfahren,
wobei die mindestens eine Master-Planungseinheit (301) jeder der Teilbereich-Planungseinheiten (302) eine Anzahl von Zeitfenstern gemäß ihrem assoziierten Teilbereich von Gewichtswerten bereitstellt (504), und
die mindestens eine Master-Planungseinheit (301) die DRR-Planung aller Teilbereich-Planungseinheiten (302) durch Senden einer Nachricht zu allen Teilbereich-Planungseinheiten (302), um das Ende eines gegenwärtigen Planungsfensters und den Anfang eines nächsten Planungsfensters anzugeben, steuert (505).

## Revendications

1. Ordonnanceur (300) pour files d'attente de paquets de données, comprenant :

une pluralité d'unités d'ordonnancement de sous-plage (302), chaque unité d'ordonnancement de sous-plage (302) étant conçue pour ordonnancer des files d'attente non vides (303) sur la base d'un procédé d'ordonnancement à tour de rôle avec déficit (DRR),
chacune des unités d'ordonnancement de sous-plage (302) étant associée à une sous-plage différente de valeurs de pondération de files d'attente, et étant réglée pour ordonnancer uniquement des files d'attente non vides (303) dont les valeurs de pondération sont dans la sous-plage associée de valeurs de pondération ; et au moins une unité d'ordonnancement maîtresse (301), conçue pour ordonnancer les unités d'ordonnancement de sous-plage (302) sur la base d'un procédé de multiplexage par répartition dans le temps (TDM), l'au moins une unité d'ordonnancement maîtresse (301) étant conçue pour fournir à chacune des unités d'ordonnancement de sous-plage (302) un certain nombre de créneaux temporels selon sa sous-plage associée de valeurs de pondération, et l'au moins une unité d'ordonnancement maîtresse (301) étant conçue pour contrôler l'ordonnancement DRR de toutes les unités d'ordonnancement de sous-plage (302) en envoyant un message à toutes les unités d'ordonnancement de sous-plage (302) afin d'indiquer la fin d'une fenêtre d'ordonnancement présente et le début d'une fenêtre d'ordonnancement suivante.

2. Ordonnanceur (300) selon la revendication 1, dans lequel :

l'au moins une unité d'ordonnancement maîtresse (301) est conçue pour sélectionner une unité d'ordonnancement de sous-plage (302) suivante parmi la pluralité d'unités d'ordonnancement de sous-plage (302) sur la base du procédé TDM, et
l'unité d'ordonnancement de sous-plage (302) sélectionnée est conçue pour sélectionner une file d'attente non vide (303) sur la base du procédé d'ordonnancement DRR.

3. Ordonnanceur (300) selon la revendication 1 ou 2, dans lequel :

pour une plage de valeurs de pondération de 1 à ($2^{MAX}$-1), où MAX est un nombre naturel, le nombre d'unités d'ordonnancement de sous-plage (302) est égal à MAX/k, où k est un nombre naturel, et une $i^{ème}$ unité d'ordonnancement de sous-plage est associée à des files d'attente (303) avec des valeurs de pondération allant de ($2^{[MAX-i*k]}$-1) à $2^{[MAX-(i+1)*k]}$.

4. Ordonnanceur (300) selon l'une quelconque des revendications 1 à 3, dans lequel :

chacune des unités d'ordonnancement de sous-plage (302) est conçue pour réaliser un ordonnancement DRR en étant configurée pour maintenir une liste active de files d'attente non vides participant dans la fenêtre d'ordonnancement présente, et une liste d'attente de files d'attente non vides en attente de participation dans la fenêtre d'ordonnancement suivante.

5. Ordonnanceur (300) selon la revendication 4, dans lequel :

chaque paire constituée d'une liste active et d'une liste d'attente contient des files d'attente non vides (303) d'une unité d'ordonnancement de sous-plage (302) spécifique ayant des valeurs de pondération en provenance de la sous-plage de valeurs de pondération associées à l'unité d'ordonnancement de sous-plage (302) spécifique.

6. Ordonnanceur (300) selon l'une quelconque des revendications 4 ou 5, dans lequel :

chacune des unités d'ordonnancement de sous-plage (302) est conçue pour basculer entre une liste active et une liste d'attente uniquement à la réception d'une indication en provenance de l'au moins une unité d'ordonnancement maîtresse (301).

7. Ordonnanceur (300) selon l'une quelconque des revendications 4 à 6, dans lequel :

chacune des unités d'ordonnancement de sous-plage (302) est conçue pour ordonnancer des files d'attente non vides (303) par un procédé DRR, et
chacune des unités d'ordonnancement de sous-plage (302) est conçue pour basculer entre une liste active et une liste d'attente à la réception d'un message en provenance de l'au moins une unité d'ordonnancement maîtresse (301), et
chacune des unités d'ordonnancement de sous-plage (302) est conçue pour supprimer une file d'attente (303) de la liste active si la file d'attente (303) devient vide, et

chacune des unités d'ordonnancement de sous-plage (302) est conçue pour déplacer une file d'attente (303) de la liste active à la liste d'attente si la file d'attente (303) consomme sa pondération dans la fenêtre d'ordonnancement présente alors qu'elle reste encore non vide.

8. Ordonnanceur (300) selon l'une quelconque des revendications 1 à 7, dans lequel :

l'au moins une unité d'ordonnancement maîtresse (301) est conçue pour sauter une unité d'ordonnancement de sous-plage (302) suivante si après la séquence TDM configurée, ladite unité d'ordonnancement de sous-plage (302) suivante ne contient pas de files d'attente non vides (303) dans sa liste active.

9. Ordonnanceur (300) selon l'une quelconque des revendications 1 à 8, dans lequel :

l'au moins une unité d'ordonnancement maîtresse (301) est conçue pour ordonnancer la pluralité d'unités d'ordonnancement de sous-plage (302) de façon entrelacée configurée.

10. Ordonnanceur (300) selon l'une quelconque des revendications 1 à 9, dans lequel :

chaque unité d'ordonnancement de sous-plage (302) est conçue pour envoyer un message à l'au moins une unité d'ordonnancement maîtresse (301) afin d'indiquer que sa liste active est devenue vide, et l'au moins une unité d'ordonnancement maîtresse (301) est conçue pour envoyer une commande à toutes les unités d'ordonnancement de sous-plage (302) afin qu'elles basculent entre leur liste active et leur liste d'attente uniquement quand les listes actives de toutes les unités d'ordonnancement de sous-plage (302) sont vides.

11. Ordonnanceur (300) selon l'une quelconque des revendications 1 à 10, dans lequel :

l'au moins une unité d'ordonnancement maîtresse (301) est conçue pour maintenir une liste TDM d'unités d'ordonnancement de sous-plage (302), qui sont listées selon le procédé TDM.

12. Ordonnanceur (300) selon les revendications 11 et 3, dans lequel :

l'au moins une unité d'ordonnancement maîtresse (301) est conçue pour régler le nombre de sélections de chaque unité d'ordonnancement de sous-plage (302) dans la liste TDM selon les sous-plages de valeurs de pondération des files d'attente (303), et
la séquence TDM doit contenir $\sum 2^{[MAX-(i+1)*k]}$ créneaux d'ordonnancement, où la somme est de 0 à MAX/k, et le placement des unités d'ordonnancement de sous-plage (302) dans la séquence TDM de créneaux d'ordonnancement est tel qu'elles sont totalement réparties et régulièrement espacées.

13. Ordonnanceur (300) selon l'une quelconque des revendications 1 à 12, dans lequel chacune des unités d'ordonnancement de sous-plage (302) comprend dans chacun d'un ou plusieurs niveaux hiérarchiques inférieurs :

une pluralité d'unités d'ordonnancement de sous-sous-plage (402), chacune des unités d'ordonnancement de sous-sous-plage (402) étant conçue pour ordonnancer des files d'attente non vides (403) sur la base d'un procédé d'ordonnancement DRR,
et
au moins une sous-unité d'ordonnancement maîtresse (401), conçue pour ordonnancer les unités d'ordonnancement de sous-sous-plage (402) sur la base d'un procédé TDM.

14. Procédé (500) d'ordonnancement de files d'attente de paquets de données, comprenant les étapes consistant à :

ordonnancer (502), par une pluralité d'unités d'ordonnancement de sous-plage (302), des files d'attente non vides (303) sur la base d'un procédé d'ordonnancement à tour de rôle avec déficit (DRR),
chacune des unités d'ordonnancement de sous-plage (302) étant associée (501) à une sous-plage différente de valeurs de pondération de files d'attente, et ordonnance (502) uniquement des files d'attente (303) dont les valeurs de pondération sont dans la sous-plage associée de valeurs de pondération ; et
ordonnancer (503), par au moins une unité d'ordonnancement maîtresse (301), les unités d'ordonnancement de sous-plage (302) sur la base d'un procédé de multiplexage par répartition dans le temps (TDM),
l'au moins une unité d'ordonnancement maîtresse (301) fournissant (504) à chacune des unités d'ordonnancement de sous-plage (302) un certain nombre de créneaux temporels selon sa sous-plage associée de valeurs de pondération, et

l'au moins une unité d'ordonnancement maîtresse (301) contrôlant (505) l'ordonnancement DRR de toutes les unités d'ordonnancement de sous-plage (302) en envoyant un message à toutes les unités d'ordonnancement de sous-plage (302) afin d'indiquer la fin d'une fenêtre d'ordonnancement présente et le début d'une fenêtre d'ordonnancement suivante.

Fig. 1

(a)

AAAAABBB..BBBCCC....CCCCDDDDD...DDDD
‾‾‾‾‾  ‾‾‾‾‾‾  ‾‾‾‾‾‾‾‾‾  ‾‾‾‾‾‾‾‾‾‾‾
  5     10     100     200

(b)

A B B C C .. C C D D D D D .. D D D
‾ ‾‾ ‾‾‾‾‾‾‾‾ ‾‾‾‾‾‾‾‾‾‾‾‾‾‾
1 2   20    40

Fig. 2

302

300

301

Range 1
DRR
scheduler

Range 2
DRR
scheduler

Queues
303

Master
Scheduler

Selected
Queues
304

Range m
DRR
scheduler

302

Fig. 3

Fig. 4

EP 3 021 540 B1

Associating a plurality of sub-range
scheduling units with a different sub-
range of weight values of queues.
501

500

Scheduling with each sub-range
scheduling unit non-empty queues
with weight values within the
associated sub-range based on a
DDR scheduling method.
502

Controlling the DRR scheduling of
all sub-range scheduling units by
sending a message to all sub-range
scheduling units to indicate the end
of a current scheduling window and
the beginning of a next scheduling
window.
504

503

Scheduling with a master scheduling
unit the sub-range scheduling units
based on a TDM method.

Providing each sub-range scheduling
unit a number of time slots according
to its associated sub-range of weight
values.
505

Fig. 5

EP 3 021 540 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6654374 B1

**Non-patent literature cited in the description**

- SRR: an O(1) time complexity packet scheduler for flows in multiservice packet networks. **C. GUO.** Proc. ACM SIGCOMM'01. ACM Press, 2001, 211-222

- **SRIRAN RAMABHADRAN et al.** Stratified Round Robin: A Low Complexity Packet Scheduler with Bandwidth Fairness and Bounded Delay. *SIGCOMM,* 2003, 239-250